# EUROPÄISCHE PATENTANMELDUNG

(11) **EP 2 028 506 A1**
(43) Veröffentlichungstag der Anmeldung: **25.02.2009**
(21) Anmeldenummer: 07016242.5
(22) Anmeldetag: 20.08.2007
(51) Int. Cl.: G01S 5/00, G01C 21/20, G08B 21/02

(54) **Sucheinrichtung zum Auffinden eines Ortes**

(71) Anmelder: Pöllet, Wilfried, 90596 Schwanstetten (DE)
(72) Erfinder: Pöllet, Wilfried, 90596 Schwanstetten (DE)
(74) Vertreter: Führing, Dieter

(57) **Zusammenfassung**

Schon mittels eines Paares von als solchen bekannten Handgeräten zum Wieder-Auffinden eines zuvor besuchten Ortes, dessen Ortskoordinaten mittels eines Satellitennavigationsempfängers ermittelt und als Zielposition (13) in die Handgeräte einspeicherbar sind, läßt sich ein Notrufsystem errichten und betreiben, das ohne aufwendige Kartenprogrammierung und ohne kostspieligen Betrieb einer Notrufzentrale auskommt. Dafür sind die Handgeräte mit wenigstens rudimentären Mobiltelefonen (14) ausgestattet. Bei einem als Notrufgerät (11) fungierenden und mitgeführten Handgerät werden als Notruf die momentan ermittelten Ortskoordinaten als die zur Hilfeleistung aufzusuchende Zielposition (13) an das andere Handgerät übermittelt. Das dient als Suchgerät (15) zum Annähern an die Zielposition (13) von seiner momentanen Suchposition (17) aus.

## Beschreibung

### Sucheinrichtung zum Auffinden eines Ortes

Die Erfindung betrifft eine Sucheinrichtung gemäß dem Oberbegriff des Hauptanspruches.

Eine derartige Sucheinrichtung ist aus der EP 1 347 305 B1 in Form eines Handgerätes mit integriertem Satellitennavigationsempfänger zum Wieder-Auffinden eines zurückliegend erreicht gewesenen Ortes bekannt, namentlich zur Rückkehr an den Ort eines zuvor abgestellten Fahrzeuges. Beim Abstellen des Fahrzeuges wurden die Koordinaten jenes Ortes in das Handgerät als spätere Zielposition eingespeichert. An anderem Orte stellen später die momentanen Ortskoordinaten des Handgerätes die momentan erreichte Suchposition (d.h. die Ausgangsposition für die Rückkehr zu dem eingespeicherten Zielort) dar. Ein in das Handgerät integrierter Navigationsrechner bestimmt aus den Ortskoordinaten vom Suchort zu Zielort den direkten Abstand zwischen der momentanen Suchposition und der zuvor fixierten Zielposition, und auf einem Display des Handgerätes wird die auf den Zielort weisende momentane Richtung dieser Entfernungsmessung angezeigt.

Der Erfindung liegt die technische Problemstellung zugrunde, Handgeräte derartiger Sucheinrichtungen noch vielfältiger einsetzbar zu machen.

Erfindungsgemäß ist diese Aufgabe dadurch gelöst, dass - entsprechend den im Hauptanspruch angegebenen wesentlichen Merkmalen - wenigstens zwei solcher Handgeräte in dem Sinne jeweils paarweise zusammenarbeiten, dass eine an einem momentan erreichten Ort manuell ausgelöste Positionsbestimmung seitens eines dieser Handgeräte, das nun als Notrufgerät fungiert, als Notruf drahtlos an das andere, dann als Suchgerät dienende Handgerät übermittelt und dort als dessen Zielposition für das Aufsuchen jenes Ortes eingespeichert wird, an dem dieser Notruf abgesetzt wurde und der deshalb zur Hilfestellung aufgesucht werden muß.

Damit ist die Basis für ein Notrufsystem geschaffen, das ohne den Aufwand für eine kartographische Wegeführung oder gar für Betrieb einer Notrufzentrale überaus funktionstüchtig ist, wenn nur am Orte ein Mobiltelefonnetz verfügbar ist - was angesichts der heutigen und kündigen Abdeckung für die Belange der Praxis keine gravierende Einschränkung darstellt. So genügt es, dass eine Person, etwa ein Spaziergänger, ein Hobbyreiter im Urlaub, ein Sportler zu Fuß, per Rad oder auf Ski, ein Bahn- oder Autoreisender oder ein Kind etwa bei einer Geländetour, beim Besuch eines großräumigen Festplatzes oder auf dem Heimweg von einer abendlichen Musik- oder Sportstunde, ein Tourist beim Bummel durch eine fremde Stadt oder ein Altenheimbewohner beim Besuch eines Parks oder eines Einkaufsviertel das als Notrufgerät ausgestattete Handgerät mit sich führt. Bei Eintreten eines Notfalls, zumal an einem der hilfsbedürftigen Person unbekannten Ort, wird das Notrufgerät z.B. manuell oder etwa mittels eines Erschütterungsaufnehmers oder über einen Sprachaktuator betätigt, etwa bei Verirren im Gelände oder sonstigem Orientierungsverlust, bei einer persönlichen Belästigung oder bei einem Sturz oder Zusammenstoß, um dadurch die aktuellen Ostskoordinaten als Zielposition für eine nun einzuleitende Hilfsmaßnahme selbsttätig zu ermitteln und an das an anderem Orte betriebene Suchgerät zu übermitteln. Das wird etwa bei Familienangehörigen, auf der Berghütte, am Reiterhof, im Hotel oder im Seniorenheim zum Empfang eines etwaigen Notrufes und damit dann zur Anzeige von Richtung und Entfernung zum Zielort bereitgehalten. Sollte diese Zielposition sich während der dann einsetzenden Suche signifikant verlagern, etwa bei einer Wildwasserfahrt oder im Entführungsfall, dann braucht das Notrufgerät nur immer wieder einmal per Tastendruck aktiviert zu werden, um so immer wieder die gerade gültige Zielposition zu übermitteln.

Die Hilfe kann dadurch nach Aufnahme des Notrufes, schon bei erstmaligem Empfang einer Zielposition im Suchgerät, gezielt eingeleitet werden, etwa als Rettungseinsatz von der Hotelunterkunft, von der Vereinskantine oder vom Elternhaus aus, wo immer das korrespondierende Suchgerät zur Kontaktaufnahme im Notfall zurückbehalten wurde. Die vom Notrufgerät ermittelten aktuellen Ortskoordinaten der hilfsbedürftigen Person werden dafür mittels eines in das Notrufgerät integrierten Mobiltelefons über z.B. eine von mehreren über insbesondere alternative Netze fest voreingestellten Wählverbindungen an das zweite Handgerät, also in jenes korrespondierende Suchgerät, als dessen Zielposition für den aktuell anstehenden Hilfseinsatz übermittelt und darin abgespeichert. Mit Empfang dieser Zielposition im Suchgerät wird zugleich die Ermittlung der Ortskoordinaten des Suchgerätes als der momentanen Anfangs-Suchposition ausgelöst - wenn die nicht darin schon fest vorgegeben sind, wie etwa bei einem Gerätesatz, der speziell zur Verwendung von einem bestimmten Altenheim oder Urlaubshotel aus vorbereitet und dort zum Notrufgeräte-Verleih für Ausflüge etwa zu Fuß, zu Roß, per Rad oder per Auto hinterlegt ist. Mit Empfang eines Notrufes erfolgt eine Signalgabe, und das Suchgerät berechnet wie oben beschrieben dessen Entfernung vom momentanen Suchort zum Notfall-Zielort hin. Falls auf den Aufwand für einen elektronischen Magnetkompaß verzichtet wird, wird infolge Fortbewegung des Suchgerätes auch die Richtung zwischen diesen beiden Ortskoordinaten bestimmt. Die Entfernung und vor allem die Richtung, in der die Person zu suchen ist, auf welche der Notruf zurückgeht, wird auf wiederholte manuelle Abfrage am Suchgerät, vorzugsweise sogar fortlaufend, auf dessem Display angezeigt.

Je nach der gegebenen Entfernung oder nach anderen Begleitumständen kann sich der Nutzer des Suchgerätes dann selbst mit diesem Suchgerät zum Ort des Hilferufes aufmachen, wofür er nur dessen momentaner Richtungsanzeige zu folgen hat, also nicht auf kartographische Erfassung und Anzeige eines zur angegebenen Zielposition führenden Wegenetzes angewiesen ist; oder er übermittelt die ihm auf seinem Suchgerät angezeigten Koordinaten der Zielposition etwa per Telefon oder per Telefax mit einem Hilfeersuchen an eine örtliche Polizei- oder Rettungswache in näherem Umkreis der Zielposition.

Zugleich mit dem Auslösen des Notrufes zum Ermitteln und Übermitteln der Zielposition für den Hilfseinsatz kann im Notrufgerät eine vorprogrammierte Information generiert werden, die als Sprach- oder als SMS-Nachricht an das Suchgerät übermittelt wird und etwa über die Person Auskunft gibt, die das Notrufgerät derzeit mit sich führt und nun Hilfe benötigt, um sogleich die in dieser Konstellation wahrscheinlich notwendigen Maßnahmen einleiten zu können. Beim Suchgerät andererseits kann eine Quittungsinformation generiert und automatisch über dessen Mobiltelefon an das Notrufgerät übermittelt werden, um den Hilfsbedürftigen graphisch oder akustisch darüber zu unterrichten, dass sein Notruf eingegangen ist, also befolgt wird.

Zweckmäßigerweise ergeht vom Notrufgerät aus zusätzlich ein vorprogrammierter Ruf mit synthetischer Sprachansage an den Mobil- oder Festnetz-Telefonanschluß eines Dritten, um diesen als Gewährsperson zu veranlassen, sich z.B. telefonisch an den Verwahrer des Suchgerätes zu wenden, damit der den aktuell auf seinem Suchgerät eingegangenen und abgespeicherten Notruf auch wirklich beachtet; bzw. damit er sein Suchgerät überhaupt erst einschaltet, wenn es momentan nicht in Betriebsbereitschaft sein sollte.

Um bei diesem erfindungsgemäßen Notrufsystem ohne Erfordernis des ständigen Bereitschaftsdienstes einer Notrufzentrale die Wahrscheinlichkeit, mit dem Notruf auch tatsächlich Hilfe zu mobilisieren, noch zu vergrößern, kann gemäß einer anderen Weiterbildung der erfindungsgemäßen Lösung vorgesehen sein, daß ein Notrufgerät bei Auslösen des Notrufes gleich mehrere Suchgeräte über deren Mobiltelefone anspricht. Andererseits kann zur besseren Ausnutzung des Geräteparks auch vorgesehen sein, daß ein Suchgerät von verschiedenen Notrufgeräten angesprochen werden kann. In beiden Fällen ist es sinnvoll, zusätzlich zur Übermittlung einer Zielposition für das Auslösen eines gezielten Hilfseinsatzes auch ein Identitätskennzeichen des gerade aktiven und empfangenen Notruigerätes - und damit seines aktuellen Nutzers - an das wenigstens eine Suchgerät zu übermitteln und dort z.B. auf dem jeweiligen Display kodiert oder in Klartext als Zusatzinformation für den Rettungseinsatz darzubieten.

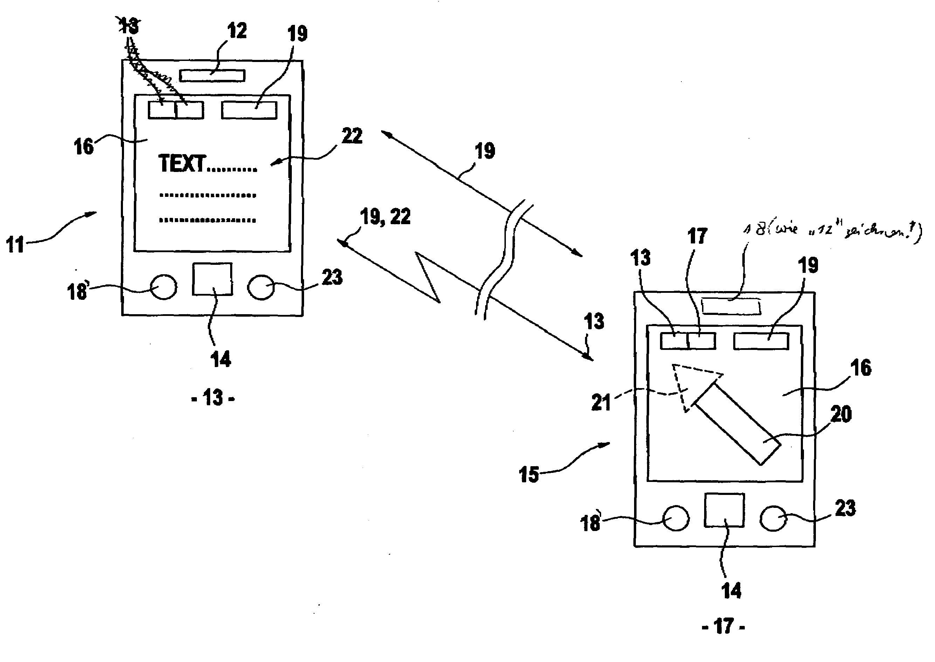

Zusätzliche Weiterbildungen und Alternativen zur erfindungsgemäßen Lösung ergeben sich aus den weiteren Ansprüchen und, auch hinsichtlich ihrer Vorteile, aus nachstehender Beschreibung eines in der Zeichnung unter Abstraktion auf das Funktionswesentliche skizzierten bevorzugten Realisierungsbeispiels eines derartigen Notrufsystems aus einem Paar von technisch wenig aufwendig ausgestatteten aber sehr funktionsstarken, miteinander kooperierenden Handgeräten prinzipiell gleicher Ausstattung zur Ortsbestimmung und Informationsübermittlung. Die einzige Figur der Zeichnung veranschaulicht das Zusammenwirken zweier solcher Handgeräte zur jeweiligen Ortsbestimmung und zur Richtungsbestimmung zwischen diesen Orten als Reaktion auf den Empfang eines Notrufes.

Eines der beiden als erfindungsgemäß ausgelegtes Notrufsystem zusammenwirkenden, batteriegespeist autarken Handgeräte wird als Notrufgerät 11 eingesetzt. Die Handgeräte sind an sich baugleich, aber durch minimale (etwa mittels eines schwerer zugänglichen - nicht skizzierten - Umschalters auswählbare) Softwareänderungen wahlweise als Notrufgerät 11 oder als Suchgerät 15 einsetzbar.

Das Notrufgerät 11 kann mit einem Notrufschalter 12 ausgestattet sein, bei dessen manueller oder sensorgesteuerter Initiierung seine momentanen Ortskoordinaten im Wege der Satellitennavigation, also in als solcher bekannter Weise mittels eingebauter Satellitenempfänger und Navigationsrechner (nicht dargestellt), als Zielposition 13 für einen Hilfs- oder Rettungseinsatz ermittelt werden. Eine ziffernmäßige oder graphische Darstellung (nicht skizziert), etwa in Form einer Reihe aus einer variablen Anzahl von Punkten, kann anzeigen, wie viele Satelliten am momentan erreichten Ort erfaßt werden, wie schnell also mit der Ermittlung der Ortskoordinaten zu rechnen ist.

Im Interesse möglichst geringer Belastung der Batterie, also langer Funktionszeit zwischen zwei Nachladungen oder Batteriewechseln, erfolgt mit dem Notrufgerät 11 erst auf Tastendruck am Schalter 12 die Positionsbestimmung, die bei guten Empfangsgegebenheiten nur wenige Sekunden benötigt. Bei Mitführen des Notrufgerätes 11 in ungünstiger Topographie, etwa in Gebäuden, zwischen Häuserschluchten oder in engen Tälern, erfolgt zweckmäßigerweise ein Umschalten (etwa manuell über eine Tastenkombination, an welcher zweckmäßigerweise der Notrufschalter 12 nicht beteiligt ist, oder automatisch wegen über längere Zeit nur mäßige Satelliten-Erreichbarkeit) auf Dauerempfang der stets gerade erreichbaren Navigationssatelliten. So stehen die Notruf-Ortskoordinaten dann bedarfsweise sofort zur Verfugung. Außerdem kann dann zweckmäßigerweise auf dem Notrufgerät 11 eine ständige Entfernungs- und Richtungsinformation zu dem Ort dargeboten werden, an dem der aktuelle Ausflug mit diesem Notrufgerät 11 gestartet wurde und dessen Ortskoordinaten in das Gerät 11 (als ständige Vorgabe, oder nur für den aktuellen Einsatzfall) eingespeichert worden waren. Die direkte (Luftlinien-)Entfernung berechnet sich unmittelbar aus den beiden Ortskoordinaten. Stattdessen oder zusätzlich kann die tatsächlich zurückgelegte Wegstrecke ermittelt und als Integralwert angezeigt werden, indem in kürzeren Abständen jeweils der Satz der momentanen Ortskoordinaten ermittelt und mit dem gerade zurückliegend ermittelten und zwischengespeicherten, jüngsten Satz von Ortskoordinaten verglichen wird, um so diese Aufeinanderfolge kurzer Wegstücke aufzusummieren.

Bei erstmaligem Betätigen des Notrufschalters 12 wird das Notrufgerät 11, etwa aus seinem Standby-Betrieb heraus, eingeschaltet und zugleich die Mobilfunkverbindung zum zugeordneten Suchgerät 15 getestet. Dabei wird ein integriertes (vollständig oder wenigstens mit seinen wesentlichen Funktionselementen realisiertes) Mobiltelefon 14 aktiviert, das die aktuelle Zielposition 13 für einen Notfalleinsatz über wenigstens eine von möglicherweise mehreren, zumal vorsorglich über unterschiedliche Netze, voreingestellten Wählverbindungen an das dadurch adressierte Mobiltelefon 14 in einem im Prinzip gleich ausgestatteten Handgerät übermittelt, das in diesem Notrufsystem als Suchgerät 15 dient. Das wird damit eingeschaltet, und auf dessen Display 16 werden die aktuellen Ortskoordinaten der empfangenen und, vorsorglich nichtflüchtig, eingespeicherten Zielposition 13 dargestellt. Mit dem Empfang werden außerdem im Suchgerät 15 dessen Ortskoordinaten als seine momentane Suchposition 17 ermittelt und nichtflüchtig abgespeichert - wenn diese Suchposition 17 nicht fest vorgegeben ist, weil dieses Gerät etwa stets vom vorgegebenen Standort einer Rettungswache aus eingesetzt wird.

Durch den Notruf-Empfang im Suchgerät 15 kann dann eine fortlaufende Ortsbestimmung der momentan gegebenen Suchposition 17 gestartet werden; oder die Hilfsperson, die über das Suchgerät 15 verfügt, betätigt zum wiederholten Ermitteln ihrer gerade erreichten Suchposition 17 einen Positionsschalter 18 des Suchgerätes 15, bei dem es sich im Interesse gleicher Ausstattung der Geräte 11, 15 um den gleichen Schalter handelt, der im Notrufgerät 11 als Notrufschalter 12 belegt ist; nur daß seine Betätigung im als Suchgerät 15 programmierten Gerät des Gerätesatzes aufgrund einer entsprechend deaktivierten Teilfunktion im Gegensatz zum als Notrufgerät 11 eingestellten Handgerät keinen Notruf zusätzlich zur Ortsermittlung auslöst.

Zweckmäßigerweise sind zusätzlich leichter als der Notrufschalter 12 zugängliche Positionsschalter 18' an den Handgeräten vorgesehen, um Ortsbestimmungen auslösen und auf den Displays 16 anzeigen zu können, ohne damit zugleich auch das Notrufszenario zu aktivieren.

Der eigentliche Positionsschalter 18 des Suchgerätes 15 zum Initiieren der Bestimmung seiner Ortskoordinaten unter Einschalten des Displays 16 kann gegebenenfalls auch als Betriebsschalter zum Einschalten des Handgerätes aus seiner batterieschonenden Bereitschaftsfunktion heraus oder aus seiner ganz abgeschalteten Funktion heraus wirken.

Die Koordinaten der aktuellen Ziel- und Suchpositionen 13, 17 werden vorteilhafterweise ziffernmäßig auf dem Display 16 ihres Suchgerätes 15 angegeben, damit die hilfeleistende Person mit dieser kartographisch verwertbaren Information z.B. breiter angelegte Suchaktionen unter Einsatz von Rettungstrupps über allgemeinen Mobilfunk oder speziellen Rettungsfunk einweisen kann.

Im Navigationsrechner eines jeden von möglicherweise mehreren gleichzeitig im Einsatz befindlichen Suchgeräten 15 wird jeweils ein Koordinatenvergleich zum Bestimmen des direkten Abstandes zwischen der jeweiligen momentanen Suchposition 17 und der seitens der hilfsbedürftigen Person fixierten, von allen empfangenen Zielposition 13 durchgeführt, der auf dem Display 16 als momentane direkte (Sichtlinien-)Zielentfernung 19 angezeigt wird. Die Richtung dieser Entfernungsmessungen wird auf dem Display 16 mittels eines Punktekreises aus aktiven oder passiven Anzeigeelementen, aber vorteilhafter wie skizziert mittels eines Drehbalkens 20 angezeigt. Bei einem kompaßbasierten Anzeigesystem weist der Drehbalken 20 unmittelbar in die Himmelsrichtung zur Zielposition 13; andernfalls ergibt die Richtungsanzeige sich im Zuge der Bewegung des Suchgerätes 15 aus aufeinander folgenden Suchpositionen 17, jeweils in Relation zur Zielposition 13. Wenn die ZielEntfernung 19 sich bei aufeinander folgenden Suchpositionen 17 verringert, bedeutet das eine Bewegung des Suchgerätes 15 auf die Zielposition 13 zu, und zur Bestätigung wird auf dem Display 16 die Darstellung des Drehbalkens 20 vorteilhafterweise, etwa wie skizziert, um einen Richtungspfeil 21 ergänzt.

Zweckmäßigerweise meldet das Mobiltelefon 14 des Suchgerätes 15 eine vorprogrammierte Empfangsquittung an das Notrufgerät 11, um der in Not befindlichen Person die Gewissheit zu vermitteln, daß ihr Notruf (in Form der Übermittlung der Zielposition 13 für den Hilfseinsatz) aufgenommen wurde. Diese Quittung kann auch in der Rückübermittlung von aktuellen Zielentfernungen 19 bestehen, um der hilfebedürftigen Person zur Beruhigung auf dem Display 16 anzuzeigen, wie die Hilfe sich ihr annähert. Statt dessen oder zusätzlich kann vorgesehen sein, an das Notrufgerät 11 eine, vorzugsweise standardisiert vorbereitete, Textinformation 22 nach Art einer SMS-Nachricht zu übermitteln und dort auf dem Display 16 anzuzeigen, oder sie akustisch verbal über den Lautsprecher des Mobiltelefones 14 darzubieten. Die kann etwa die Mitteilung beinhalten, daß die aktuelle Zielposition 13, z.B. wegen der großen Entfernung 19 von der aktuellen Suchposition 13, telefonisch einem örtlichen zuständigen Rettungsdienst wie der Bergwacht, einer Polizei- oder Feuerwehrstation oder der Wache eines Festplatzes übermittelt wird, von wo aus man sich der Notsituation annimmt.

Zusätzlich ist es zweckmäßig, mit dem Auslösen des Notrufes vom Mobiltelefon 14 des Notrufgerätes 11 aus eine vorbereitete Standardinformation als Sprach- oder Textnachricht an einen sonstigen Telefonanschluß im Festnetz oder in einem Mobilnetz abzusetzen, etwa an einen Bekannten oder an eine Rettungsleitstelle. Darüber wird der Empfänger aufgefordert, sich nach der Betriebsbereitschaft und dem Verbleib des vom Notrufgerät 11 gerade angesprochen Suchgerätes 15 zu erkundigen, um sicherzustellen, daß dessen Anzeige beachtet und die Hilfsaktion eingeleitet wird, beispielsweise von dem Berg- oder Reiterhotel aus, welches das Notrufgerät 11 an seinen, später potentiell in Not geratenden, Gast ausgeliehen und das korrespondierende Suchgerät 15 für eine dann etwa erforderlich werdende Rettungsaktion zurückbehalten hat.

Bei mit nicht nur rudimentär sondern aufwendiger ausgestatteten Mobiltelefonen 14 in den Geräten 11, 15 kann mit Abgabe des Notrufes auch über die voreingestellte Anwahl eine Sprachverbindung durchgeschaltet werden, um unmittelbar nähere Informationen über die aktuelle Notsituation berichten und Verhaltensratschläge übermitteln zu können.

Es ist grundsätzlich nicht erforderlich, die an sich zum Wieder-Auffinden eines Ortes, etwa eines abgestellten Gegenstandes, konzipierten Handgeräte für deren erfindungsgemäß paarweises Zusammenwirken als Notrufsystem zusätzlich mit dem erwähnten, gesonderten Notrufschalter 12 auszustatten. Es kann auch vorgesehen sein, den Notruf mit seiner Ortsbestimmung der Zielposition 13 dadurch auszulösen, daß schaltungs- oder softwaremäßig abgefragt wird, ob zwei am Handgerät ohnehin vorhandene Schalter, nämlich der Positionsschalter 18' und etwa ein Betriebsschalter 23 zeitlich überlappend betätigt werden; welch letzterer an sich etwa durch langandauernde Betätigung dem Ein- und Ausschalten der Stromversorgung für Standby-Betrieb des Handgerätes dient, und gegebenenfalls auch beispielsweise mittels mehrmaliger Betätigung rasch nacheinander einem Umschalten zwischen unterschiedlichen Darbietungen auf dem Display 16. Wie das zuvor beschriebene Betätigen eines etwa vorhanden eigenen Notrufschalters 12 führt auch solche untypische Bedienung zweier Schalter 18'+23 am als Notrufgerät 11 eingesetzten Handgerät dann zur Wirkung der Betätigung eines Notrufschalters 12, nämlich zur Ermittlung der momentanen Zielposition 13 des Notrufgerätes 11 und zugleich zum Einschalten seines Mobiltelefone 14 für die Übermittlung dieser Ortskoordinaten an ein über die voreingestellte Rufnummer seines Mobiltelefons 14 zugeordnetes Suchgerät 15.

Jedenfalls läßt sich so erfindungsgemäß schon mittels eines Paares von gleich ausgestatteten Handgeräten zum Anlaufen eines Ortes, dessen Ortskoordinaten mittels eines Satellitennavigationsempfängers ermittelbar und als Zielposition 13 abspeicherbar sind, ein Notrufsystem errichten und betreiben, das ohne den aufwendigen Betrieb einer Notrufzentrale auskommt und auch dort einsetzbar ist, wo keine digital erfassten Wegenetze existieren. Dafür sind die Handgeräte mit wenigstens rudimentären Mobiltelefone 14 ausgestattet. Bei einem als Notrufgerät 11 fungierenden und mitgeführten dieser Handgeräte werden die momentanen Ortskoordinaten ermittelt und als die zur Hilfeleistung aufzusuchende Zielposition 13 an das andere Handgerät übermittelt. Das dient als Suchgerät 15 zum Annähern an diese darin fixierte und richtungsmäßig angezeigte Zielposition 13 von der jeweils momentan erreichten Suchposition 17 aus.

### Bezugszeichenliste

- 11: Als Notrufgerät eingesetztes der untereinander gleich ausgestatteten Handgeräte
- 12: Notrufschalter an 11 bzw. Positionsschalter (18) an 15
- 13: Zielposition von 11 für 15
- 14: Mobiltelefone
- 15: als Suchgerät eingesetztes der Handgeräte
- 16: Displays
- 17: Suchposition von 15
- 18: Positionsschalter (auch 18')
- 19: Zielentfernung (Luftlinienstrecke zwischen 13 und 17)
- 20: Drehbalken zur Richtungsanzeige von 17 nach 13
- 21: Richtungspfeil bei Annäherungsbewegung von 17 an 13
- 22: Textinformation von 15 an 11
- 23: Betriebsschalter für Stromversorgung und gegebenenfalls Displayumschaltung

## Patentansprüche

1. Sucheinrichtung zum Auffinden eines Ortes mittels eines Handgerätes, das, zum Bestimmen und Abspeichern von Ortskoordinaten als Zielposition (13) bzw. als Suchposition (17), mit einem Satellitennavigationsempfänger sowie zum Ermitteln und Darstellen der Richtung der Zielposition (13) relativ zur aktuellen Suchposition (17) mit einem Navigationsrechner und mit einem Display (16) ausgestattet ist, **dadurch gekennzeichnet, daß** ein als Notrufgerät (11) einzusetzendes von wenigstens zwei wenigstens im Wesentlichen gleich ausgestatteten derartigen Handgeräten dafür ausgelegt ist, bei Auslösen einer Bestimmung der momentanen Ortskoordinaten dieses Notrufgerätes (11) dessen Position als Zielposition (13) an ein anderes, als Suchgerät (15) ausgelegtes Handgerät zu übermitteln und in jenes Suchgerät (15), zusätzlich zu dessen eigenen Ortskoordinaten als anfänglicher Suchposition (17), einzuspeichern.

2. Sucheinrichtung nach dem vorangehenden Anspruch, **dadurch gekennzeichnet, daß** die Handgeräte mit wenigstens rudimentären Mobilfunktelefonen (14) für Senden bzw. Empfangen wenigstens der Zielposition (13) ausgestattet sind.

3. Sucheinrichtung nach einem der vorangehenden Ansprüche, **dadurch gekennzeichnet, daß** das Notrufgerät (11) mit einem Notrufschalter (12) zum Auslösen der Ermittlung und Übermittlung der Zielposition (13) ausgestattet ist, der am Suchgerät (15) aber nur als Positionsschalter (18) zum Ermitteln und Einspeichern der momentanen Suchposition (17) eingerichtet ist.

4. Sucheinrichtung nach einem der vorangehenden Ansprüche, **dadurch gekennzeichnet, daß** die Satellitennavigationsempfänger in den Handgeräten für, insbesondere bei ungünstigen Empfangsgegebenheiten hinsichtlich der Anzahl erfaßter Navigationssatelliten, Umschalten auf Dauerempfang ausgelegt sind.

5. Sucheinrichtung nach einem der vorangehenden Ansprüche, **dadurch gekennzeichnet, daß** mit der Zielposition (13) ein Identitätskennzeichen vom Notrufgerät (11) an das Suchgerät (15) übermittelbar ist.

6. Sucheinrichtung nach einem der vorangehenden Ansprüche, **dadurch gekennzeichnet, daß** vom Suchgerät (15) die momentane Zielentfernung (19) an das Notrufgerät (11) rückübermittelbar ist, die darauf darbietbar ist.

7. Sucheinrichtung nach einem der vorangehenden Ansprüche, **dadurch gekennzeichnet, daß,** in Reaktion auf den Empfang einer Zielposition (13), vom Suchgerät (15) eine Textinformation (22) an das Notrufgerät (11) übermittelbar ist, die auf seinem Display (16) oder akustisch darbietbar ist.

8. Sucheinrichtung nach einem der vorangehenden Ansprüche, **dadurch gekennzeichnet, daß** auf wenigstens einem Display (16) der Integralwert von aufeinanderfolgenden kurzen Wegstücken zwischen jeweils zwei aufeinanderfolgend über die Positionsschalter (18,18') ermittelten Positionen als die tatsächlich zurückgelegte Wegstrecke darbietbar ist.

9. Sucheinrichtung nach einem der vorangehenden Ansprüche, **dadurch gekennzeichnet, daß** auf dem Display (16) des Suchgerätes (15) eine Zielrichtungsdarstellung in Form eines die Richtung der Messung der Zielentfernung (19) angebenden Drehbalkens (20) darbietbar ist, der während aktueller Verringerung der Zielentfernung (19) bei aufeinander folgenden Suchpositionen (17) um einen Richtungspfeil (21) ergänzt ist.

10. Sucheinrichtung nach einem der vorangehenden Ansprüche, **gekennzeichnet durch** eine Funktionssicherung und Gerätezuordnung hinsichtlich wenigstens einer von voreingestellten Verbindungen zwischen den Mobiltelefonen (14) des, insbesondere an Rettungsleitstellen wie Bergwachthütten oder Hotels bereitgehaltenen, Suchgerätes (15) und eines vorübergehend nahebei betriebenen, dort auszugebenden Notrufgerätes (11), in Form erstmaligen Betätigens seines Notrufschalters (12).
